# EUROPEAN PATENT SPECIFICATION

(11) **EP 2 661 355 B1**
(45) Date of publication and mention of the grant of the patent: **23.07.2014**
(21) Application number: 12700591.6
(22) Date of filing: 06.01.2012
(51) Int. Cl.: B29C 70/08, B29C 70/02, B29C 35/02, B29K 309/08, B29K 307/04, B29C 70/52

(54) **PULTRUSION METHOD FOR PRODUCTION OF A PROFILE**
STRANGZIEHVERFAHREN ZUR HERSTELLUNG EINES PROFILS
PROCÉDÉ DE PULTRUSION POUR LA PRODUCTION D'UN PROFILÉ

(30) Priority: 06.01.2011 DK 201170005
(43) Date of publication of application: 13.11.2013
(73) Proprietor: VKR Holding A/S, 2979 Hørsholm (DK)
(72) Inventor: NØRGAARD, Henry, DK-6950 Ringkøbing (DK); HAAG, Michael Drachmann, DK-6710 Esbjerg V (DK); NØRHOLM, Ole, DK-7400 Herning (DK)
(74) Representative: Olesen, Kaj
(86) International application number: PCT/DK2012/000001
(87) International publication number: WO 2012/097815

(56) References cited:
- EP-A2- 0 274 707
- US-A- 5 993 713
- US-A- 6 007 655
- US-A1- 2008 284 131

## Description

### FIELD OF THE INVENTION

The invention relates to a pultrusion process and, more particularly, to an improved pultrusion process to manufacture products/profiles with sections of different thickness.

### BACKGROUND OF THE INVENTION

The composite moulding industry constantly improves its processes to develop products that are lightweight, durable and have improved physical characteristics. Further, a number of companies constantly invest in research and development to facilitate both economical and efficient manufacturing of such products.

Among the various composite moulding techniques, pultrusion is one of the most common techniques for manufacturing composites. It is well known in the art that the pultrusion process facilitates continuous production of composites, thereby helping the manufacturers attain high efficiency and productivity. In a typical pultrusion process, fibre materials are pulled through a resin tank. The resin-impregnated fibre materials are then further pulled through the heated mould for being formed and subsequently cured into a desired shape.

The moulded/pultruded product, which also may be referred to as a 'profile', is manufactured with a cross-section corresponding to the geometric shape of the corresponding mould. The profile may have a plurality of sections that may have different or similar thickness. As described above, the resin fibre material is introduced into the mould and heated to cure the resin fibre material to a profile. Typically, the curing time is derived based on the amount of time that the thickest section of the profile requires to get cured, as the thickest section contains a higher amount of the resin fibre material.

To compensate for the longer curing time of the thicker sections of the profile, the speed of the manufacturing process needs to be sacrificed. This limitation leads to a decrease in the number of pultruded profiles produced per hour and thus affects the overall productivity and efficiency of the manufacturing process. For some profiles it may be possible to use alternative designs resembling the desired design to maybe avoid thick sections or at least lessen the differences in thickness of sections to partly overcome the described problem; however, this is not an ideal solution as it decreases the design possibilities.

US 2008 284 131 A1 discloses a method according to the preamble of claim 1 and a pultruded profile according to the preamble of claim 9. In light of the above discussion, there is a need for a method that can provide a more uniform curing time for the complete profile, irrespective of the thicker and thinner sections. The method should thereby help in improving the overall productivity and efficiency of the manufacturing process.

### OBJECT AND SUMMARY OF THE INVENTION

It is an object of the invention to provide an improved pultrusion method to achieve a more uniform curing time for individual sections of a profile with different thickness.

According to the invention, a more uniform curing time for the overall profile, irrespective of different thicknesses of sections, is achieved by using at least two different fibre materials. The first fibre material has a higher thermal conductivity and the second fibre material has a lower thermal conductivity. The fibre materials are first impregnated in a resin. Subsequently, the resin-impregnated fibre materials are led into the heated forming mould to cure the resin-impregnated fibre materials to obtain the pultruded profile. A different percentage mixture of the two resin-impregnated fibre materials is used in different sections of the profile based on the thickness of the various sections.

By adding different amounts of fibres of the first fibre material with a higher thermal conductivity than the second fibre material, it will be possible to adjust the thermal conductivity of the section as such. Hereby, thermal conductivity may be adjusted for the individual sections according to their thickness and consequently the time required for curing will deviate less between the individual sections. The use of the present technique is applicable in profiles with any deviation between thicknesses of sections: however, it is most relevant to use in profiles with at least one section having a markedly larger thickness than other sections. With only slight differences in thickness, the extra work and costs involved with adjusting the fibres may typically not result in a sufficient corresponding gain from decrease in curing time.

The invention relates to a method of pultruding a profile (100) using a group of fibre materials, said profile having a cross-section associated with a cross-section of a mould; said profile comprising a plurality of sections (102a, 102b, 102c) each having a thickness (T₁, T₂, T₃), wherein the thickness of at least one first section is larger than the thickness of at least one second section, the method comprising:
a. impregnating the group of fibre materials with a resin, the group of fibre materials comprising a first fibre group and a second fibre group, wherein the thermal conductivity of the first fibre group is higher than the thermal conductivity of the second fibre group;
b. positioning the resin-impregnated first fibre group and the resin-impregnated second fibre group so that the percentage of fibres from the first fibre group, positioned in the at least one first section, is higher than the corresponding percentage of fibres from the first fibre group positioned in the at least one second section; and
c. heating the profile to cure the resin-impregnated group of fibre materials.

Moreover, the invention relates to a pultruded profile comprising:
a. at least one first section; and
b. at least one second section; at least one of the at least one first section and the at least one second section having a resin-impregnated first fibre group and resin-impregnated second fibre group, wherein the thermal conductivity of the first fibre group is higher than the thermal conductivity of the second fibre group,
wherein the thickness of said at least one first section is larger than the thickness of said at least one second section, the percentage of fibres from the first fibre group, present in the at least one first section, is higher than the corresponding percentage of fibres from the first fibre group present in the at least one second section.

In an aspect of the invention, the thickness of said at least one first section is at least 25%, and preferably 50%, larger than the thickness of said at least one second section.

In an aspect of the invention, the percentage of fibres from the first fibre material, positioned in at least one first section, is more than 30% and preferably more than 50% higher than the percentage of fibres from the first fibre material positioned in at least one second section. It should be noted that in some embodiments the second section may be free of fibres of the first fibre material.

In an aspect of the invention, said profile comprises fibres from the first fibre group in an amount of 0.1-30 %, such as 1-20 % or 2-10 % by weight of the total number of fibres in said profile.

In an aspect of the invention, the fibres from the first fibre material are positioned, in the first section, so that their concentration is higher near the forming mould surface as compared to their concentration close to the centre of the first section.

As the heating through the profile originates from the mould, transfer of heating is most relevant close to the mould surface.

In an aspect of the invention, the first and the second fibre materials according to this invention are, generally, carbon and glass based materials, respectively.

In an aspect of the invention, the resin-impregnated group of fibre materials is heated prior to being positioned into the forming mould.

In an aspect of the invention, all fibre material from the first.group of fibre materials is positioned in the thickest at least one first section of the profile.

In an aspect of the invention, all of the plurality of sections comprise fibre material from both the first and the second group of fibre materials.

In an aspect of the invention, a number of the plurality of sections only comprise fibre material from the second group of fibre material.

It is an advantage of the present invention that a more uniform curing time may be achieved for a profile that has multiple sections of different thickness. The method of the present invention directly increases the production efficiency and cost effectiveness of the overall manufacturing process.

In some cases, by applying the method of the present invention, the pultrusion apparatus may be run at higher speeds than what would be possible by using only fibre material from the second group. Alternatively, the length of the heated mould may be reduced, the mould being a costly part in the pultrusion set up.

By applying the method of the present invention, the uniformity of the cured resin material in the profile may be improved, whereby the mechanical and dimensional stability of the final profile may be improved as well.

### BRIEF DESCRIPTION OF THE DRAWINGS

In the following section, the invention will be described in a greater detail with reference to embodiments shown by the enclosed figures. It should be emphasised that the embodiments shown are used for example purposes only and should not be used to limit the scope of the invention.

The invention and embodiments thereof will now be further elucidated by means of figures.
Figure 1 illustrates a pultruded profile having sections with different thickness; and
Figure 2 is a block diagram illustrating a system implementing a method for pultruding a profile.

A person skilled in the art will readily appreciate that various features disclosed in the description may be modified, and that various embodiments disclosed and/or claimed may be combined without departing from the scope of the invention. As an example of this the present invention can just as well be used with a system where the fibres are impregnated in a closed bath, such as a resin box having one or more impregnation chambers, or an open bath system.

### DETAILED DESCRIPTION OF THE EMBODIMENTS

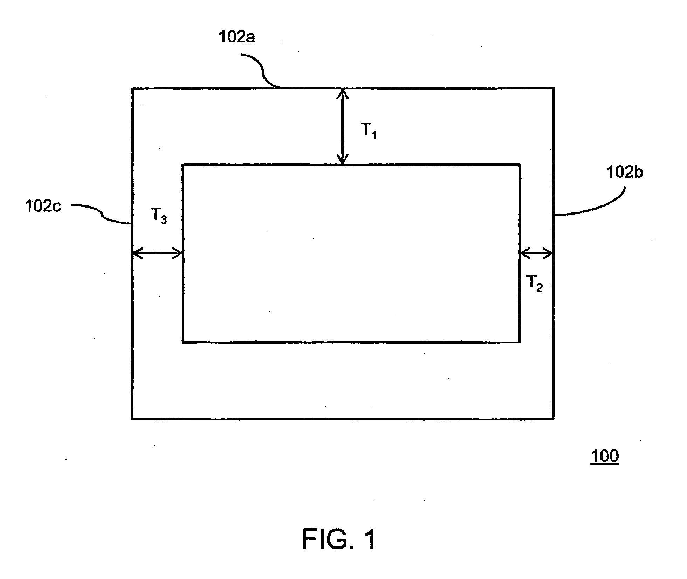

Figure 1 illustrates a cross-section of an exemplary profile 100, in accordance with an embodiment of the invention. The profile 100 has a number of sections, such as a section 102a, a section 102b and a section 102c. Further, each of the sections has a different thickness. In the current exemplary embodiment, the section 102a is one of two thickest sections with an associated thickness T1 and the section 102b is the thinnest section with an associated thickness T2. Further, the section 102c has a thickness T3 that is less than T1 but greater than T2.

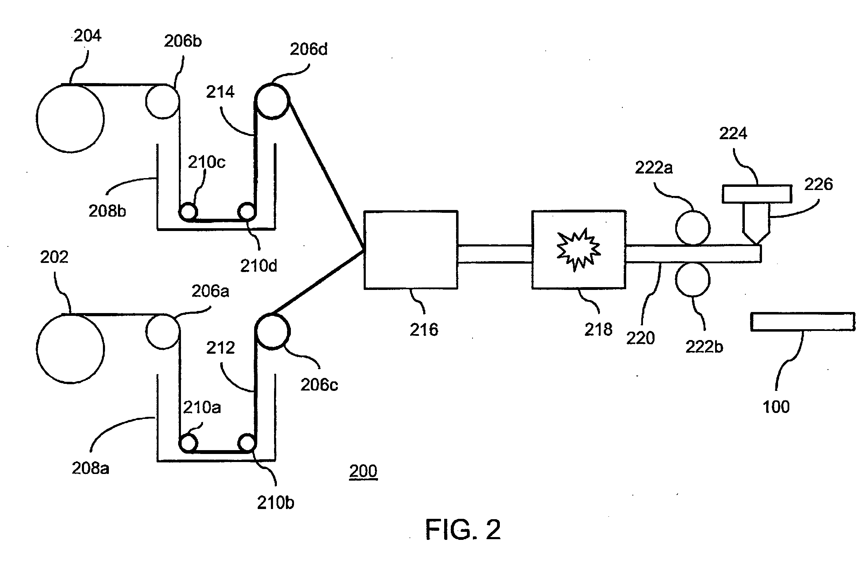

Profiles, such as the profile 100, are currently used in a wide variety of application areas such as engineering, aerospace, construction and pre-fabricated building and infrastructural accessories such as doors, windows and sky-light frames. The type of fibre material that is used in the pultrusion process, generally, depends on the area of application. Various examples of the fibre materials include, but are not limited to, glass, carbon and aramide. The method of obtaining the profile 100 by the pultrusion process is explained in detail in conjunction with Figure 2.

Figure 2 schematically represents a system 200 implementing a method for manufacturing the profile 100, in accordance with an embodiment of the invention.

In operation, fibre material is provided at a large number of rollers; of these only two are shown 202 and 204. It may be apparent to any person skilled in the art that the fibre material is provided in a pre-defined form. Further, the pre-defined form in which the fibre material is provided typically depends on special properties/characteristics associated with the desired profile 100 corresponding to an application area. Various examples of the pre-defined form include, but are not limited to, single fibres, tows, rovings and mats.

In an embodiment of the invention, the fibre material guided through at least one roller 202, also referred to as a first fibre group, has a relatively higher thermal conductivity and can preferably be made from carbon. Preferred fibres for the first fibre group are carbon fibres with thermal conductivity values between 80 and 90 W/mK or specially designed thermal conductivity-enhanced carbon fibres with thermal conductivity values between 80 and 300 W/mK. Further, the fibre material guided through at least one other roller 204, also referred to as a second fibre group, has a relatively lower thermal conductivity and can preferably be made from glass. Preferred fibres for the second fibre group are glass fibres with thermal conductivity values below 2 W/mK. It may be apparent to any person skilled in the art that suitable materials apart from carbon and glass can be used.

Thereafter, the fibre materials from the rollers 202 and 204 may, as shown, be passed through tensioning rollers 206a and 206b into a resin tank 208a and 208b, respectively. In each of the resin tank 208a and 208b, the fibre material is impregnated with a resin by guiding the fibre materials through a corresponding roller 210a, 210b, 210c and 210d.

In an embodiment of the invention, the resin impregnation can be carried out in any manner known in the art, e.g. by dipping the fibre material into a resin bath or tank. In a preferred embodiment not shown in the figure, the large number of fibres or fibre materials from all the rollers are collected in a single bundle and pulled through one resin box for impregnation without the aid of tensioning rollers or rollers within the resin box. Instead the large number of fibres or fibre materials are guided via guide plates from the large number of rollers towards the resin box, where they are wetted with resin before directly entering the mould. The resin typically used in the pultrusion process can be selected from a group of polyurethanes, polyesters and epoxies. It may be apparent to any person skilled in the art that any other suitable resin material can be used.

Subsequently, the resin-impregnated fibres 212 and 214 are passed through tensioning and guiding rollers 206c and 206d and introduced into a forming mould 216. In another embodiment of the invention, the resin-impregnated fibres 212 and 214 may also be heated prior to introducing the fibres into the resin box or forming mould 216. It may be apparent to any person skilled in the art that before introducing the resin-impregnated fibre material into the forming mould 216, any conventional de-bulking mechanism may be provided to remove any excess resin from the resin-impregnated fibre materials 212 and 214. Further, the forming mould 216 corresponds to the desired geometric shape of the profile 100. Thus, it may be apparent to any person skilled in the art that each of the plurality of sections at the forming mould 216 corresponds to the sections of the desired profile 100. The forming mould 216 may, generally, be made of metal, e.g. steel or aluminium.

The resin-impregnated fibres 212 and 214 are introduced into the forming mould 216 such that the resin-impregnated fibre materials 212 and 214 are positioned and filled in a controlled manner in the plurality of sections. This positioning is preferably done with guide plates situated prior to entering the resin box, and in the case of a single resin box, at least prior to entering the mould.

In a preferred embodiment, the mould 216 and heating station 218 are one and the same element; however, in the figure, after passing the forming mould 216, the profile is heated at a heating station 218 to cure and set the positioned resin-impregnated fibre materials 212 and 214 to obtain the profile 100. The process of heating the forming mould 216 may be carried out in any conventional manner known in the art.

Curing time of the positioned resin-impregnated fibre material is related to the thickness of the sections of the profile 100. To achieve a more uniform curing time for the thicker as well as the thinner sections, a mixture of the resin-impregnated fibres 212 and 214, which possess different thermal conductivities, is introduced into the forming mould 216.

This is further elaborated with the help of the positioning of fibres in each section of a cross-section of the forming mould 216. A first section of the forming mould 216 corresponding to the section 102a includes a mixture of the resin-impregnated fibres 212 and 214. As discussed above, the thermal conductivity of the first fibre material present in the resin-impregnated fibre material 212 is higher than the thermal conductivity of the second fibre material present in the resin-impregnated material 214. Thus, it may be appreciated by any person skilled in the art that the necessary curing time will be reduced when fibres with higher thermal conductivity are introduced in suitable parts of the profile; i.e. within the thicker sections.

Similarly, to match the curing time of the first section, a second section corresponding to the section 102b also includes the resin-impregnated fibre materials 212 and 214. However, the percentage of the resin-impregnated fibre 212 (having relatively higher thermal conductivity) relative to the total fibre amount in the second section is lower than the percentage of resin-impregnated fibre 212 in the first section, adjusted to the lesser thickness T2 of the second section as compared to thickness T1 of the first section, so that the times required to cure the resin in T1 and T2 are approached to each other to some extent.

In an embodiment of the invention, the thickness of said at least one first section is at least 25%, and preferably 50% larger than the thickness of said at least one second section. Further, in an embodiment of the invention, the percentage of fibres from the resin-impregnated fibre 212 positioned in the first section is more than 30%, and preferably more than 50% higher, as compared to the percentage of fibres from the resin-impregnated fibre 212 positioned in the second section. In some embodiments, at least one section, such as the figured second section, does not include fibres with higher thermal conductivity as the required curing time for this section may establish the required curing time for the profile as such.

The cross-section of the forming mould 216 includes a third section corresponding to the section 102c of the profile 100. The resin-impregnated fibres 212 and 214 are positioned in the third section such that the percentage of resin-impregnated fibre 212 is less than the percentage of resin-impregnated fibre 212 present in the first section, and the percentage of resin-impregnated fibre 214 present in the third section is less than the percentage of the resin-impregnated fibre 214 present in the second section. Further, in various embodiments of the invention, the resin-impregnated fibres 212 are positioned in a manner that the concentration of these fibres is higher near the surface of the forming mould 216 as compared to their concentration close to the centre of each of the plurality of sections.

After the fibres have turned into a profile during the curing process, the cured profile 220 is continuously pulled from the heating section 218 or heated mould with a conventional pulling mechanism in the form of a roller 222a and a roller 222b. In this way the cured profile 220 is advanced to a cutting station 224. At the cutting station 224, the continuously pultruded cured profile 220 is cut with a saw 226 at a predetermined length to obtain the final profile 100.

The method described above has a number of advantages. The method facilitates to achieve a more uniform curing time of a profile that has multiple sections of different thickness by using fibres of different thermal conductivities in a pre-defined ratio. Thereby it is possible to produce profiles at a higher line speed, because it is possible to reduce the residence time of the profile in the mould/heating zone. Hence, this directly increases the production efficiency and cost effectiveness of the manufacturing process. Further, another advantage of using a mixture of fibres is to avoid a particular section's over-curing, and thus preventing reductions in the pultruded profile's desired physical characteristics, e.g. dimensions and strength.

It is emphasised that the present invention can be varied in many ways, of which the alternative embodiments as presented are just a few examples. These different embodiments are, hence, non-limiting examples. The scope of the present invention, however, is only limited by the subsequently following claims.

## Claims

1. A method of pultruding a profile (100) using a group of fibre materials, said profile having a cross-section associated with a cross-section of a mould; said profile comprising a plurality of sections (102a, 102b, 102c) each having a thickness (T₁, T₂, T₃), wherein the thickness of at least one first section is larger than the thickness of at least one second section, **characterized in that** the method comprises :
a. impregnating the group of fibre materials with a resin, the group of fibre materials comprising a first fibre group and a second fibre group, wherein the thermal conductivity of the first fibre group is higher than the thermal conductivity of the second fibre group;
b. positioning the resin-impregnated first fibre group and the resin-impregnated second fibre group so that the percentage of fibres from the first fibre group, positioned in the at least one first section, is higher than the corresponding percentage of fibres from the first fibre group positioned in the at least one second section; and
c. heating the profile to cure the resin-impregnated group of fibre materials.

2. The method according to any one of claims 1, wherein said profile comprises fibres from the first fibre group in an amount of 0.1-30 %, such as 1-20 % or 2-10 % by weight of the total number of fibres in said profile.

3. The method according to any one of claims 1-2, wherein the fibres from the first fibre group are positioned so that the concentration of these fibres, placed in the at least one first section, are higher near the mould surface than close to the centre of the at least one first section.

4. The method according to any one of claims 1-3, wherein the mould comprises at least one third section having a thickness that is smaller than the thickness of said at least one first section and larger than the thickness of said at least one second section, and by positioning the first and the second fibre group so that the percentage of fibres from the first fibre group is less than the percentage of fibres of the first fibre group positioned in the at least one first section, and the percentage of the fibres from the second fibre group is less than the percentage of fibres of the second fibre group positioned in the at least one second section.

5. The method according to any one of claims 1-4, wherein the first fibre group is primarily carbon based.

6. The method according to any one of claims 1-5 further comprising heating the resin-impregnated group of fibre materials prior to being positioned into the mould.

7. The method according to any one of claims 1-6, wherein all fibre material from the first group of fibre materials is positioned in the thickest at least one first section of the profile.

8. The method according to any one of claims 1-6, wherein all of the plurality of sections comprise fibre material from both the first and the second group of fibre materials.

9. A pultruded profile (100) comprising:
a. at least one first section (102a); and
b. at least one second section (102b); wherein the thickness (T1) of said at least one first section is larger than the tickness (T2) of said at least one second section, and **characterized in that** at least one of the at least one first section and the at least one second section has a resin-impregnated first fibre group and resin-impregnated second fibre group, wherein the thermal conductivity of the first fibre group is higher than the thermal conductivity of the second fibre group, and **in that**
the first fibre group, present in the at least one first section, is higher than the corresponding percentage of fibres from the first fibre group present in the at least one second section.

10. The pultruded profile according to claim 9, wherein the percentage of fibres from the first fibre group, present in the at least one first section, is more than 30% and preferably more than 50% than the percentage of fibres from the first fibre group present in the at least one second section.

11. The pultruded profile according to any one of claims 9-10, wherein the concentration of the fibres associated with the first fibre group present in the at least one first section is higher near the surface than close to the center of the at least one first section.

12. The pultruded profile according to any one of claims 9-11, wherein the pultruded profile comprises at least one third section having a thickness that is smaller than the thickness of said at least one first section and larger than the thickness of said at least one second section, the at least one third section comprising the first and the second fibre group so that the percentage of fibres from the first fibre group is less than the percentage of fibres from the first fibre group present in the at least one first section, and the percentage of the fibres from the second fibre group is less than the percentage of fibres of the second fibre group present in the at least one second section.

13. The pultruded profile according to any one of claims 9-12, wherein the first fibre group is primarily carbon based.

14. The pultruded profile according to any one of claims 9-13, wherein all of the plurality of sections comprise fibre material from both the first and the second group of fibre materials.

15. The pultruded profile according to any one of claims 9-13, wherein a number of the plurality of sections only comprise fibre material from the second group of fibre material.

## Patentansprüche

1. Verfahren zum Strangziehen eines Profils (100) unter Verwendung einer Gruppe von Fasermaterialien, wobei das Profil einen Querschnitt hat, der dem Querschnitt einer Gussform zugeordnet ist; wobei das Profil mehrere Abschnitte (102a, 102b, 102c) umfasst, von denen jeder eine Dicke (T₁, T₂, T₃) hat, wobei die Dicke wenigstens eines ersten Abschnitts größer ist als die Dicke wenigstens eines zweiten Abschnitts, **dadurch gekennzeichnet, dass** das Verfahren Folgendes umfasst:
a) Imprägnieren der Gruppe von Fasermaterialien mit einem Harz, wobei die Gruppe von Fasermaterialien eine erste Fasergruppe und eine zweite Fasergruppe umfasst und wobei die Wärmeleitfähigkeit der ersten Fasergruppe höher ist als die Wärmeleitfähigkeit der zweiten Fasergruppe;
b) Positionieren der harz-imprägnierten ersten Fasergruppe und der harz-imprägnierten zweiten Fasergruppe derart, dass der Anteil Fasern aus der ersten Fasergruppe, der in dem wenigstens einen ersten Abschnitt positioniert wird, größer ist als der entsprechende Anteil Fasern aus der ersten Fasergruppe, der in dem wenigstens einen zweiten Abschnitt positioniert wird; und
c) Erhitzen des Profils, um die harz-imprägnierte Gruppe von Fasermaterialien aushärten zu lassen.

2. Verfahren nach Anspruch 1, wobei das Profil Fasern aus der ersten Fasergruppe in einem Anteil von 0,1 - 30%, wie etwa 1 - 20% oder 2 - 10 % nach Gewicht von der Gesamtzahl Fasern in dem Profil umfasst.

3. Verfahren nach einem der Ansprüche 1 bis 2, wobei die Fasern aus der ersten Fasergruppe so positioniert werden, dass die Konzentration dieser Fasern, die in dem wenigstens einen ersten Abschnitt platziert werden, nahe der Gussformoberfläche höher ist als in der Nähe des Zentrums des wenigstens einen ersten Abschnitts.

4. Verfahren nach einem der Ansprüche 1 bis 3, wobei die Gussform wenigstens einen dritten Abschnitt umfasst, der eine Dicke hat, die geringer ist als die Dicke des wenigstens einen ersten Abschnitts und größer als die Dicke des wenigstens einen zweiten Abschnitts, und bei dem die erste und zweite Fasergruppe so positioniert werden, dass der Anteil Fasern aus der ersten Fasergruppe geringer ist als der Anteil Fasern aus der ersten Fasergruppe, die in dem wenigstens einen ersten Abschnitt positioniert werden, und der Anteil Fasern aus der zweiten Fasergruppe geringer ist als der Anteil Fasern aus der zweiten Fasergruppe, die in dem wenigstens einen zweiten Abschnitt positioniert werden.

5. Verfahren nach einem der Ansprüche 1 bis 4, wobei die erste Fasergruppe hauptsächlich karbon-basiert ist.

6. Verfahren nach einem der Ansprüche 1 bis 5, das außerdem das Erhitzen der harz-imprägnierten Gruppe von Fasermaterialien umfasst, bevor diese in der Gussform positioniert werden.

7. Verfahren nach einem der Ansprüche 1 bis 6, wobei alles Fasermaterial aus der ersten Gruppe von Fasermaterialien im dicksten wenigstens einen ersten Abschnitt des Profils positioniert wird.

8. Verfahren nach einem der Ansprüche 1 bis 6, wobei alle der mehreren Abschnitte Fasermaterial aus sowohl der ersten als auch der zweiten Gruppe von Fasermaterialien umfassen.

9. Stranggezogenes Profil (100), Folgendes umfassend:
a) wenigstens einen ersten Abschnitt (102a); und
b) wenigstens einen zweiten Abschnitt (102b);
wobei die Dicke (T₁) des wenigstens einen ersten Abschnitts größer ist als die Dicke (T₂) des wenigstens einen zweiten Abschnitts, und **dadurch gekennzeichnet, dass** wenigstens einer von dem wenigstens einen ersten Abschnitt und dem wenigstens einen zweiten Abschnitt eine harz-imprägnierte erste Fasergruppe und eine harz-imprägnierte zweite Fasergruppe hat, wobei die Wärmeleitfähigkeit der ersten Fasergruppe höher ist als die Wärmeleitfähigkeit der zweiten Fasergruppe, und dadurch, dass
der Anteil Fasern aus der ersten Fasergruppe, der in dem wenigstens einen ersten Abschnitt vorhanden ist, größer ist als der entsprechende Anteil Fasern aus der ersten Fasergruppe, der in dem wenigstens einen zweiten Abschnitt vorhanden ist.

10. Stranggezogenes Profil nach Anspruch 9, wobei der Anteil Fasern aus der ersten Gruppe, der in dem wenigstens einen ersten Abschnitt vorhanden ist, mehr als 30% und vorzugsweise mehr als 50% über dem Anteil Fasern aus der ersten Fasergruppe liegt, der in dem wenigstens einen zweiten Abschnitt vorhanden ist.

11. Stranggezogenes Profil nach einem der Ansprüche 9 bis 10, wobei die Konzentration von Fasern, die der ersten Fasergruppe zugeordnet und die in dem wenigstens einen ersten Abschnitt vorhanden sind, nahe der Oberfläch höher ist als in der Nähe des Zentrums des wenigstens einen ersten Abschnitts.

12. Stranggezogenes Profil nach einem der Ansprüche 9 bis 11, wobei das stranggezogene Profil wenigstens einen dritten Abschnitt umfasst, der eine Dicke hat, die geringer ist als die Dicke des wenigstens einen ersten Abschnitts und größer als die Dicke des wenigstens einen zweiten Abschnitts, wobei der wenigstens eine dritte Abschnitt die erste und die zweite Fasergruppe umfasst, und dies derart, dass der Anteil Fasern aus der ersten Fasergruppe geringer ist als der Anteil Fasern aus der ersten Fasergruppe, die in dem wenigstens einen ersten Abschnitt vorhanden sind, und der Anteil Fasern aus der zweiten Fasergruppe geringer ist als der Anteil Fasern aus der zweiten Fasergruppe, die in dem wenigstens einen zweiten Abschnitt vorhanden sind.

13. Stranggezogenes Profil nach einem der Ansprüche 9 bis 12, wobei die erste Fasergruppe hauptsächlich karbon-basiert ist.

14. Stranggezogenes Profil nach einem der Ansprüche 9 bis 13, wobei alle der mehreren Abschnitte Fasermaterial aus sowohl der ersten als auch der zweiten Gruppe von Fasermaterialien umfassen.

15. Stranggezogenes Profil nach einem der Ansprüche 9 bis 13, wobei eine Anzahl der mehreren Abschnitte nur Fasermaterial aus der zweiten Gruppe von Fasermaterialien umfasst.

## Revendications

1. Procédé de pultrusion d'un profilé (100) à l'aide d'un groupe de matériaux de fibres, ledit profilé ayant une section transversale associée à une section transversale d'un moule ; ledit profilé comprenant une pluralité de sections (102a, 102b, 102c) ayant chacune une épaisseur (T₁, T₂, T₃), dans lequel l'épaisseur d'au moins une première section est plus grande que l'épaisseur d'au moins une deuxième section, **caractérisé en ce que** le procédé comprend :
a. l'imprégnation du groupe de matériaux de fibres avec une résine, le groupe de matériaux de fibres comprenant un premier groupe de fibres et un second groupe de fibres, dans lequel la conductivité thermique du premier groupe de fibres est supérieure à la conductivité thermique du second groupe de fibres ;
b. le positionnement du premier groupe de fibres imprégné de résine et du second groupe de fibres imprégné de résine de sorte que le pourcentage de fibres issues du premier groupe de fibres, positionné dans la au moins une première section, est supérieur au pourcentage correspondant de fibres issues du premier groupe de fibres positionné dans la au moins une deuxième section ; et
c. le chauffage du profilé pour durcir le groupe de matériaux de fibres imprégné de résine.

2. Procédé selon la revendication 1, dans lequel ledit profilé comprend des fibres issues du premier groupe de fibres en une quantité de 0,1 à 30 %, tel que 1 à 20 % ou 2 à 10 % en poids du nombre total de fibres dans ledit profilé.

3. Procédé selon l'une quelconque des revendications 1 à 2, dans lequel les fibres issues du premier groupe de fibres sont positionnées de sorte que la concentration en ces fibres, placées dans la au moins une première section, soit supérieure près de la surface du moule qu'à proximité du centre de la au moins une première section.

4. Procédé selon l'une quelconque des revendications 1 à 3, dans lequel le moule comprend au moins une troisième section ayant une épaisseur qui est plus petite que l'épaisseur de ladite au moins une première section et plus grande que l'épaisseur de ladite au moins une deuxième section, et par le positionnement du premier et du second groupe de fibres de sorte que le pourcentage de fibres issues du premier groupe de fibres soit inférieur au pourcentage de fibres du premier groupe de fibres positionné dans la au moins une première section, et le pourcentage de fibres issues du second groupe de fibres soit inférieur au pourcentage de fibres du second groupe de fibres positionnées dans la au moins une deuxième section.

5. Procédé selon l'une quelconque des revendications 1 à 4, dans lequel le premier groupe de fibres est essentiellement à base de carbone.

6. Procédé selon l'une quelconque des revendications 1 à 5, comprenant en outre le chauffage du groupe de matériaux de fibres imprégné de résine avant de le positionner dans le moule.

7. Procédé selon l'une quelconque des revendications 1 à 6, dans lequel la totalité des matériaux de fibres issues du premier groupe de matériaux de fibres est positionnée dans la au moins une première section la plus épaisse du profilé.

8. Procédé selon l'une quelconque des revendications 1 à 6, dans lequel la totalité de la pluralité de sections comprend un matériau de fibres issues à la fois du premier et du second groupe de matériaux de fibres.

9. Profilé pultrudé (100) comprenant :
a. au moins une première section (102a) ; et
b. au moins une deuxième section (102b) ; dans lequel l'épaisseur (T₁) de ladite au moins une première section est plus grande que l'épaisseur (T₂) de ladite au moins une deuxième section, et **caractérisé en ce qu'**au moins l'une de la au moins une première section et la au moins une deuxième section comporte un premier groupe de fibres imprégné de résine et un second groupe de fibres imprégné de résine, dans lequel la conductivité thermique du premier groupe de fibres est supérieure à la conductivité thermique du second groupe de fibres, et **en ce que** le pourcentage de fibres issues du premier groupe de fibres, présent au moins dans la au moins une première section, est supérieur au pourcentage correspondant de fibres issues du premier groupe de fibres présent dans la au moins une deuxième section.

10. Profilé pultrudé selon la revendication 9, dans lequel le pourcentage de fibres issues du premier groupe de fibres, présent dans la au moins une première section, est supérieur de 30 % et de préférence supérieur de 50 % au pourcentage de fibres issues du premier groupe de fibres présent dans la au moins une deuxième section.

11. Profilé pultrudé selon l'une quelconque des revendications 9 à 10, dans lequel la concentration en fibres associées au premier groupe de fibres présent dans la au moins une première section est supérieure près de la surface qu'à proximité du centre de la au moins une première section.

12. Profilé pultrudé selon l'une quelconque des revendications 9 à 11, dans lequel le profilé pultrudé comprend au moins une troisième section ayant une épaisseur qui est plus petite que l'épaisseur de ladite au moins une première section et plus grande que l'épaisseur de ladite au moins une deuxième section, la au moins une troisième section comprenant les premier et second groupes de fibres de sorte que le pourcentage de fibres issues du premier groupe de fibres soit inférieur au pourcentage de fibres issues du premier groupe de fibres présent dans la au moins une première section, et que le pourcentage de fibres issues du second groupe de fibres soit inférieur au pourcentage de fibres du second groupe de fibres présent dans la au moins une deuxième section.

13. Profilé pultrudé selon l'une quelconque des revendications 9 à 12, dans lequel le premier groupe de fibres est essentiellement à base de carbone.

14. Profilé pultrudé selon l'une quelconque des revendications 9 à 13, dans lequel la totalité de la pluralité de sections comprend un matériau de fibres issues à la fois du premier et du second groupe de matériaux de fibres.

15. Profilé pultrudé selon l'une quelconque des revendications 9 à 13, dans lequel un certain nombre de la pluralité de sections ne comprennent un matériau de fibres issues uniquement du second groupe de matériau de fibres.
